(19) Europäisches Patentamt
European Patent Office
Office européen des brevets

(11) EP 3 168 785 A1

(12) EUROPEAN PATENT APPLICATION
published in accordance with Art. 153(4) EPC

(43) Date of publication:
17.05.2017 Bulletin 2017/20

(51) Int Cl.:
G06K 19/02 (2006.01)　　　　B32B 29/00 (2006.01)
G09F 3/00 (2006.01)

(21) Application number: 15818669.2

(22) Date of filing: 18.06.2015

(86) International application number:
PCT/JP2015/067538

(87) International publication number:
WO 2016/006405 (14.01.2016 Gazette 2016/02)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 09.07.2014 JP 2014141382

(71) Applicant: Dowa Electronics Materials Co., Ltd.
Chiyoda-ku
Tokyo 101-0021 (JP)

(72) Inventors:
• YOSHIHARA Daiki
Tokyo 101-0021 (JP)
• SAITO Hirotoshi
Tokyo 101-0021 (JP)
• YAMASHITA Shuji
Tokyo 101-0021 (JP)
• ITOH Daisuke
Tokyo 101-0021 (JP)

(74) Representative: Carstens, Dirk Wilhelm
Wagner & Geyer
Gewürzmühlstraße 5
80538 München (DE)

(54) RFID TAG SUBSTRATE INCLUDING PAPER BASE, AND RFID TAG

(57) To improve weather resistance of an RFID tag containing a paper substrate having an antenna circuit formed on the surface thereof.

An RFID tag substrate containing a paper substrate having an eluted chloride ion amount per unit mass (1 g) according to the following item (A) of 0.100 mg or less, having formed on a surface thereof a conduction circuit: (A) a specimen of the paper substrate having an area corresponding to an A4 size (210 × 297 mm) determined in ISO 216 is broken into small pieces each of 100 mm$^2$ or less; the small pieces are entirely placed in a polypropylene vessel; 50 mL of water having an electric conductivity of 0.2 mS/m or less is added thereto to immerse the small pieces entirely into the water; after allowing to stand at 23°C ±2°C for 1 hour, the water is filtered with a membrane filter to recover a filtrate; and the filtrate is analyzed by an ion chromatography method to obtain a chloride ion ($Cl^-$) concentration in the filtrate, from which a total chloride ion amount eluted into 50 mL of the water is obtained, and is divided by the mass (g) of the specimen of the paper substrate to provide a value, which is designated as the eluted chloride ion amount per unit mass.

[Fig.6]

**Description**

Technical Field

The present invention relates to a substrate for an RFID tag containing a paper substrate having formed thereon an antenna circuit, and an RFID tag using the same.

Background Art

RFID (radio frequency identification) is being widely applied to such purposes as logistics management and the like. An RFID tag attached to an item is constituted by a substrate having an antenna circuit, and an IC chip mounted on the substrate. The IC chip used is frequently a type that performs conduction to the antenna circuit on the substrate through a metal member in the form of a protrusion, which is referred to as a bump.

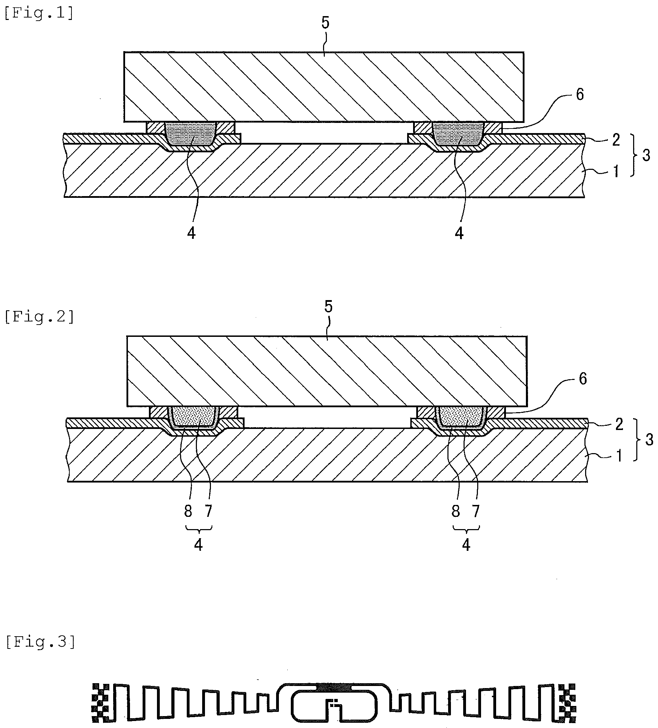

Fig. 1 schematically exemplifies a cross sectional structure of an RFID tag having an IC chip mounted thereon. A conduction circuit 2 is formed on a surface of a substrate 1 to constitute an RFID tag substrate 3. The conduction circuit 2 is designed to have a circuit pattern that functions as an antenna. In recent years, an antenna circuit having a desired pattern with good flexibility and conductivity can be relatively easily drawn, for example, with a low temperature baking type conductive paste using silver nanoparticles (PTL 1). An IC chip 5 having metallic bumps 4 is attached to the substrate 1 with a conductive adhesive 6. The bump 4 is in contact with a part of the conduction circuit 2, and the electronic circuit inside the IC chip 5 and the conduction circuit 2 as an antenna are electrically connected to each other. The bump 4 has been generally constituted by a noble metal, such as gold. In recent years, however, from the standpoint of cost reduction, there is a tendency that such examples are being increased that employs a bump of a "noble metal-plated type" containing a relatively inexpensive metal, such as nickel, having a noble metal, such as gold, plated on the surface thereof.

Fig. 2 schematically exemplifies a cross sectional structure of an RFID tag having mounted thereon an IC chip having noble metal-plated type bumps. The bump 4 has a noble metal plated layer 8 on a surface of an internal metal member 7. In the figure, the thickness of the noble metal plated layer 8 is emphasized. The internal metal member 7 is constituted by a metal (for example, nickel) having a standard electrode potential that is more negative than a noble metal. The surface of the bump 4 is a noble metal, and thus good conductivity to the conduction circuit 2 is obtained. The product cost of an RFID tag can be reduced by sufficiently reducing the cost for the plating treatment of the bump since the amount of a noble metal used is smaller than the case where the bump is entirely constituted by a noble metal.

Citation List

Patent Literature

PTL 1: JP-A-2013-127913

Summary of Invention

Technical Problem

As the base for disposing an antenna circuit of an RFID tag (i.e., a member corresponding to 1 in Figs. 1 and 2), a resin sheet has been generally frequently used. The substrate is demanded to have certain flexibility, but excessive deformation thereof may damage the antenna circuit, which thus fails to function as an antenna. Accordingly, as a material of the substrate, an insulating resin having a suitable strength is often selected.

In such purposes as logistics management of clothing items and pulp products, and authenticity determination of alcoholic beverages and the like, there is a demand of an RFID tag using paper as a substrate. Paper also has such nature as easy breakability, and it is expected in the future that there is an increasing demand of an RFID tag using a paper substrate in a purpose where easy breakability is important. As described above, a low-temperature baking type conductive paint containing silver nanoparticles has been developed in recent years. By using a printing technique using, for example, the conductive paint, an antenna circuit with good flex resistance can be drawn on a surface of a paper substrate, and industrial mass production of an easily breakable RFID tag using a paper substrate can be performed.

However, there is an emerging problem occurring in promotion of spread of an RFID tag containing a paper substrate having an antenna circuit formed thereon. Specifically, it has been found that in the case where an IC tag having a noble metal plated type bump as shown in Fig. 2 is used, the bump is often corroded depending on the use environment, and there are cases where drastic decrease of the communication distance occurs in the early stage. In view of the circumstances, an object of the invention is to provide a technique for stably preventing performance deterioration due to weather resistance failure of an RFID tag containing a paper substrate having an antenna circuit formed on the surface thereof.

Solution to Problem

The object can be achieved by an RFID tag substrate containing a paper substrate having an eluted chloride ion amount per unit mass (1 g) according to the following item (A) of 0.100 mg or less, having formed on a surface thereof a conduction circuit:

(A) a specimen of the paper substrate having an area corresponding to an A4 size (210 $\times$ 297 mm) determined in ISO 216 is broken into small pieces each of 100 mm$^2$ or less; the small pieces are entirely placed in a polypropylene vessel; 50 mL of water having an electric conductivity of 0.2 mS/m or less is added thereto to immerse the small pieces entirely into the water; after allowing to stand at 23°C $\pm$2°C for 1 hour, the water is filtered with a membrane filter to recover a filtrate; and the filtrate is analyzed by an ion chromatography method to obtain a chloride ion (Cl$^-$) concentration in the filtrate, from which a total chloride ion amount eluted into 50 mL of the water is obtained, and is divided by the mass (g) of the specimen of the paper substrate to provide a value, which is designated as the eluted chloride ion amount per unit mass.

The "paper" herein means one that is produced by agglutinating vegetable fibers or other fibers, as defined in JIS P0001:1998, "Terms of paper, paper board, and pulp", No. 4004, and includes synthetic paper produced by using a synthetic polymer substance as a raw material, and one containing a fibrous inorganic material. One having been subjected to a surface treatment with a resin or the like is also included.

On the RFID tag substrate, an IC chip having a metallic bump coated with noble metal plating is mounted. The noble metal referred herein includes gold, silver, and platinum group elements (e.g., platinum, palladium, rhodium, iridium, ruthenium, and osmium). The metal coated with noble metal plating, i.e., the internal metal constituting the bump, is a metal having a standard electrode potential that is more negative than the noble metal of the plated layer, and examples thereof include nickel. The conduction circuit on the surface of the paper substrate is formed by printing, and is preferably formed, for example, of a silver conductive film.

The invention also provides an RFID tag containing an RFID tag substrate containing a paper substrate having an eluted chloride ion amount per unit mass according to the item (A) of 0.100 mg or less, having formed on a surface thereof a conduction circuit, and bonded thereto an IC chip having a metallic bump coated with noble metal plating, the conduction circuit and the metallic bump of the IC chip being electrically connected to each other.

Advantageous Effects of Invention

According to the invention, in an RFID tag containing a paper substrate having an antenna circuit formed on the surface thereof, the weather resistance in the case where an IC chip having a noble metal plated type bump is mounted can be stably improved. Accordingly, the invention contributes to the spread of a low-cost RFID tag utilizing the easy breakability of a paper substrate.

Brief Description of Drawings

Fig. 1 is an illustration schematically exemplifying a cross sectional structure of an RFID tag having an IC chip having bumps mounted thereon.
Fig. 2 is an illustration schematically exemplifying a cross sectional structure of an RFID tag having an IC chip having noble metal plated type bumps mounted thereon.
Fig. 3 is an illustration showing an example of an antenna circuit pattern of an RFID tag.
Fig. 4 is a graph showing the eluted chloride ion amount per unit mass of the paper substrate and the communication distance retention ratio of the RFID tag using the same.
Fig. 5 is a graph showing the eluted sulfate ion amount per unit mass of the paper substrate and the communication distance retention ratio of the RFID tag using the same.
Fig. 6 is a graph showing the eluted chloride ion amount per unit mass of the paper substrate and the communication distance after the weather resistance test of the RFID tag using the same.

Description of Embodiments

As described above, in the case where an IC tag having a noble metal plated type bump as shown in Fig. 2 is used in an RFID tag containing a paper substrate having an antenna circuit formed on the surface thereof, the bump is often corroded depending on the use environment, and there are cases where drastic decrease of the communication distance occurs in the early stage. According to the research by the inventors, it has been found that the corrosion of the bump of this type occurs due to bimetallic corrosion (galvanic corrosion), in which a local cell is formed between the noble metal plated layer and the internal metal member, which is more negative than the noble metal, and the internal metal as a base metal is dissolved. The corrosion of the bump increases the electric resistance to the antenna circuit, and thereby the performance of the antenna is deteriorated. The presence of a pinhole as a coating defect is unavoidable in the noble metal plated layer, and it is considered that the noble metal plated layer and the internal metal member are connected to each other through the pinhole with a water film caused by water attached to the article or moisture in the air, thereby forming a local cell.

Even an IC chip that causes no problem in an RFID tag using a resin substrate often undergoes bimetallic corrosion when the IC chip is applied to an RFID tag using a paper substrate. It is considered therefrom that the paper substrate, which is liable to contain water as compared to the resin substrate, becomes a cause of bimetallic corrosion of the bump. On the other hand, the progress of bimetallic corrosion is also largely influenced by the factor of the corrosion environment, i.e., the amount of the ion species (electrolytes) that facilitate the progress of corrosion contained in the aqueous solution in contact with both the metals. There is a high possibility that the ion species are supplied from the paper substrate containing water.

Under the circumstances, the inventors have made accumulated investigations for finding the relationship among the kind and the amount of the ion source substances contained in the paper substrate and the corrosion of the bump. As a result, it has been found that the amount of a chloride ion ($Cl^-$) supplied from the paper substrate largely influences the bimetallic corrosion of the bump. Specifically, it has been found that the bimetallic corrosion of the bump can be significantly prevented by mounting an IC chip having a noble metal plated type bump on a paper substrate that has an eluted chloride ion amount per unit mass according to the item (A) of 0.100 mg or less. Accordingly, the weather resistance of the RFID tag containing an IC chip having a noble metal plated type bump mounted on a paper substrate antenna can be significantly improved. The use of the paper substrate that has an eluted chloride ion amount per unit mass according to the item (A) of 0.060 mg or less is more effective, and the use of the paper substrate that has an eluted chloride ion amount of 0.050 mg or less is further preferred.

The operation of breaking the paper substrate specimen into small pieces each of 100 $mm^2$ or less according to the item (A) is preferably performed by fingers wearing gloves for clean room operations or the like, for preventing contamination. In the case where the paper is broken into small pieces each of 100 $mm^2$ or less by fingers wearing gloves of this type, the sizes of the small pieces may be generally in a range of from 25 to 100 $mm^2$. When the sizes of the small pieces broken by fingers are in the range, the influence of the sizes of the paper pieces on fluctuation of the analysis values can be ignored.

The influence of a sulfate ion ($SO_4^{2-}$) among the ion species supplied from the paper substrate has also been investigated. As a result, it has been found that the significant improvement effect of the weather resistance can be basically obtained when the eluted chloride ion amount per unit mass of the paper substrate is sufficiently suppressed, and the influence of a sulfate ion is small. From the standpoint of achieving higher reliability, the eluted sulfate ion amount per unit mass according to the following item (B) is preferably 0.800 mg or less.

(B) A specimen of the paper substrate having an area corresponding to an A4 size (210 × 297 mm) determined in ISO 216 is broken into small pieces each of 100 $mm^2$ or less; the small pieces are entirely placed in a polypropylene vessel; 50 mL of water having an electric conductivity of 0.2 mS/m or less is added thereto to immerse the small pieces entirely into the water; after allowing to stand at 23°C ±2°C for 1 hour, the water is filtered with a membrane filter to recover a filtrate; and the filtrate is analyzed by an ion chromatography method to obtain a sulfate ion ($SO_4^{2-}$) concentration in the filtrate, from which a total sulfate ion amount eluted into 50 mL of the water is obtained, and is divided by the mass (g) of the specimen of the paper substrate to provide a value, which is designated as the eluted sulfate ion amount per unit mass.

In this case, when the sizes of the small pieces broken by fingers are in the aforementioned range, the influence of the sizes of the paper pieces on fluctuation of the analysis values can be ignored, as similar to the case of the item (A).

Example

The substrates in the form of a sheet shown in Table 1 were prepared. The substrate No. 9 is PET (polyethylene terephthalate), and the others are paper. The paper substrates include products of plural manufacturers.

Table 1

| Substrate No. | Material | Mass of A4 size paper (g) | Characteristics |
|---|---|---|---|
| 1 | paper | 3.0180 | resin coated paper with good dust generation prevention capability |
| 2 | paper | 3.0568 | neutral interleaving paper |
| 3 | paper | 3.1035 | acidic interleaving paper using aluminum nitrate |
| 4 | paper | 4.3174 | neutral paper |
| 5 | paper | 5.6138 | neutral paper added with special chemical |
| 6 | paper | 8.3147 | high smooth paper |
| 7 | paper | 4.9651 | resin coated paper suitable for lid material |
| 8 | paper | 4.8748 | universal copy paper |
| 9 | PET | - | PET sheet subjected to easy adhesion treatment with good adhesiveness |
| 10 | paper | 4.3839 | dust generation prevented paper with reduced resin coating amount |
| 11 | paper | 5.1942 | water resistant paper used for yogurt container, etc. |
| 12 | paper | 5.2746 | high dimensional stability paper having strengthening agent fixed to fibers with aluminum nitrate |
| 13 | paper | 8.8737 | base paper for coating with high water resistance |
| 14 | paper | 4.0650 | paper with good dust generation prevention property subjected to acidic treatment |
| 15 | paper | 5.8494 | resin coated paper |
| 16 | paper | 8.2329 | highly designed paper suitable for decoration |

Measurement of Eluted Ion Concertation

The paper substrates were measured for the eluted chloride ion amount per unit mass (1 g) of the paper substrate by a method according to the item (A). Specifically, for example, the chloride ion concentration in the filtrate by ion chromatography was 1.60 ppm for the substrate No. 1. Thus, 0.0016 mg of chloride ions are present in 1 mL of the filtrate. The total amount of chloride ions eluted in 50 mL of water added is $0.0016 \times 50 = 0.080$ mg. The mass of the A4 size paper substrate No. 1 used in the elution test is 3.018 g, and thus the eluted chloride ion amount per unit mass (1 g) is obtained as $0.080 / 3.018 \approx 0.0265$ mg.

The eluted sulfate ion amount per unit mass of the paper substrate was measured by a method according to the item (B) .

The operation of breaking the paper substrate specimen into small pieces was performed by wearing powder-free nitrile gloves for clean room operation (Clean Nol Nitrile Gloves, produced by AS ONE Corporation).

The analysis by the ion chromatography method was performed by using IC 25, produced by Dionex, under the following conditions.

Column: Dionex IonPac AS12A
Column oven temperature: 35°C
Flow rate of eluent: 1.5 mL/min
Suppressor current: 50 mA

Production RFID Tag Substrate

As a conductive paint, a silver ink (Model PFI-700, produced PChem Associates, Inc.) containing 60% by mass of silver particles having a primary average particle diameter of 15 nm and a secondary average particle diameter of 340 nm, 3.0% by mass of a vinyl chloride copolymer latex, 2.0% by mass of a polyurethane thickener, and 2.5% by mass of propylene glycol was prepared. The silver ink was printed on the surfaces of the paper substrates with a sheet feed flexographic printer (produced by Nihon Denshi Seiki Co., Ltd.) and a flexographic plate under condition of an anilox volume of 8 cm³/m², so as to draw an antenna having the circuit pattern shown in Fig. 3. The circuit pattern is designed to adapt to the IC chip described later. The drawn area of the antenna is 8 mm × 94 mm, and the line width thereof is approximately 0.6 mm. The antenna after drawing was baked by performing a heat treatment at 155°C for 30 seconds on a hot plate, thereby forming a conduction circuit having an antenna shape formed of a silver conductive film having an average thickness of from 0.5 to 1.0 μm, and thus the RFID tag substrate was obtained.

Production of RFID Tag

As an IC chip, Monza4, produced by Impinj, Inc., was prepared. The IC chip has a "noble metal plated type" bump containing nickel having gold plating on the surface thereof. An anisotropic conductive paste (ACP) (TAP0604C, produced by Kyocera Chemical Corporation) containing Au/Ni coated polymer particles was thinly coated on the portion on the RFID tag substrate where the IC chip was to be bonded (i. e. , the vicinity of the bump position). The IC chip was disposed on the ACP and then bonded under pressure for 10 seconds by applying a load of 1.0 N at 160°C with a heat compression bonding machine (TTS300, produced by Muhlbauer AG), thereby mounting the IC chip on the RFID tag substrate, and thus an RFID tag was obtained.

Measurement of Communication Distance

The RFID tags thus produced above were measured for the communication distance (theoretical communication distance forward) in a frequency range of from 800 to 1,100 MHz (according to ISO/IEC 18000-6C) in a radio black box (MY1530, produced by Micronics Japan Co., Ltd.) with a communication distance measuring device (Tagformance, produced by Voyantic, Ltd.). Before the measurement, the environmental setting (setting with the reference tag attached to Tagformance) was performed under the condition.

Subsequently, the RFID tags were subjected to an accelerated weather resistance test by retaining in a thermo-hygrostat chamber under condition of 85°C and 85%RH for 168 hours, and then measured for the communication distance in the same manner as above.

The communication distance before the accelerated weather resistance test is referred to as an "initial communication distance", and the communication distance after the accelerated weather resistance test is referred to as a "communication distance after weather resistance test". Herein, the measured values at 920 MHz were used as the "initial communication distance" and the "communication distance after weather resistance test" of the RFID tags, and the communication distance retention ratio before and after the accelerated weather resistance test was obtained by substituting the values into the following expression (1).

$$
\begin{aligned}
&(\text{communication distance retention ratio (\%))} = \\
&((\text{communication distance after weather resistance test (m)}) \\
&/ (\text{initial communication distance (m)})) \times 100 \ ... \ (1)
\end{aligned}
$$

The communication distance retention ratio that is 80% or more can be evaluated to provide practically excellent weather resistance as an RFID tag using a paper substrate. Accordingly, one having a communication distance retention ratio of 80% or more was determined as ○ (good weather resistance), and the others were determined as × (poor weather resistance).

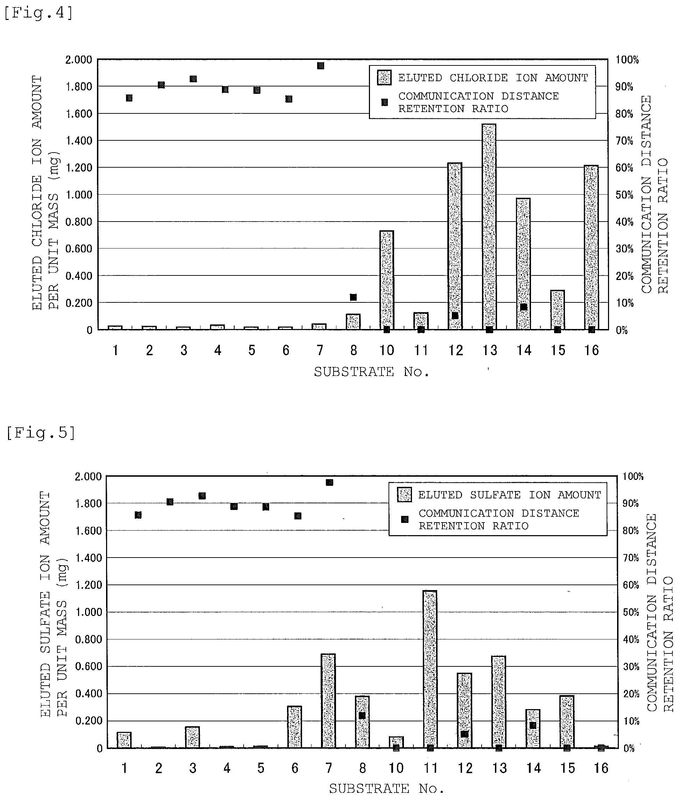

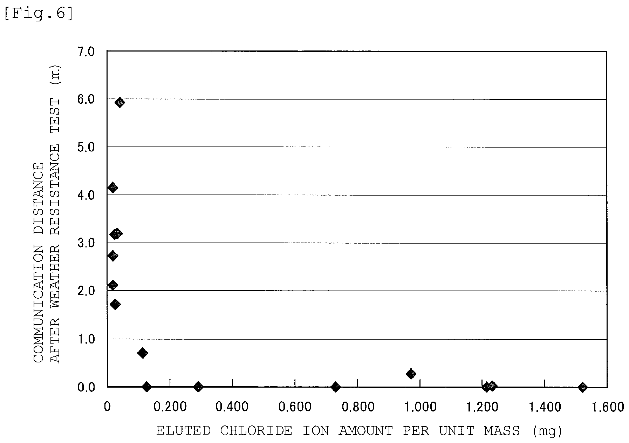

The results are shown in Table 2. Fig. 4 shows the eluted chloride ion amount per unit mass of the paper substrate and the communication distance retention ratio of the RFID tag using the same. Fig. 5 shows the eluted sulfate ion amount per unit mass of the paper substrate and the communication distance retention ratio of the RFID tag using the same. Fig. 6 shows the eluted chloride ion amount per unit mass of the paper substrate and the communication distance after the weather resistance test of the RFID tag using the same.

Table 2

| Substrate No. | Eluted ion amount per unit mass of substrate (mg/1g substrate) | | Communication distance (920 MHz) (m) | | Communication distance-retention ratio *1 (%) | Evaluation of weather resistance | Class |
|---|---|---|---|---|---|---|---|
| | Chloride ion | Sulfate ion | Initial | After weather resistance test | | | |
| 1 | 0.0265 | 0.116 | 2.00 | 1.72 | 86 | ○ | invention |
| 2 | 0.0245 | 0.0082 | 3.51 | 3.18 | 91 | ○ | |
| 3 | 0.0193 | 0.156 | 4.48 | 4.15 | 93 | ○ | |
| 4 | 0.0336 | 0.0116 | 3.60 | 3.20 | 89 | ○ | |
| 5 | 0.0187 | 0.0143 | 2.39 | 2.12 | 89 | ○ | |
| 6 | 0.0192 | 0.307 | 3.20 | 2.73 | 85 | ○ | |
| 7 | 0.0423 | 0.691 | 6.07 | 5.93 | 98 | ○ | |
| 8 | 0.113 | 0.380 | 5.88 | 0.70 | 12 | × | comparison |
| 9 | - | - | 4.97 | 4.77 | 96 | ○ | |
| 10 | 0.730 | 0.0833 | 0.00 | 0.00 | 0 | × | |
| 11 | 0.125 | 1.155 | 5.59 | 0.00 | 0 | × | |
| 12 | 1.232 | 0.550 | 0.44 | 0.02 | 5 | × | |
| 13 | 1.521 | 0.676 | 4.73 | 0.00 | 0 | × | |
| 14 | 0.972 | 0.283 | 3.31 | 0.28 | 8 | × | |
| 15 | 0.291 | 0.385 | 4.95 | 0.00 | 0 | × | |
| 16 | 1.215 | 0.0134 | 2.96 | 0.00 | 0 | × | |
| *1: 0% for initial read distance of 0.00 m | | | | | | | |

It is understood from Table 2 and Figs. 4 and 6 that the use of the paper substrate having an eluted chloride ion amount per unit mass according to the item (A) of 0.100 mg or less significantly enhances the weather resistance on mounting an IC chip having a noble metal plated type bump. It is understood from Table 2 and Fig. 5 that the paper substrate having a sufficiently low eluted chloride ion concentration exhibits good weather resistance even though the eluted sulfate ion amount per unit mass according to the item (B) is increased close to 0.800 mg.

Reference Sign List

1  substrate
2  conduction circuit
3  RFID tag substrate
4  bump
5  IC chip
6  conductive adhesive
7  internal metal member
8  noble metal plated layer

**Claims**

1.  An RFID tag substrate comprising a paper substrate having an eluted chloride ion amount per unit mass (1 g) according to the following item (A) of 0.100 mg or less, having formed on a surface thereof a conduction circuit:

    (A) a specimen of the paper substrate having an area corresponding to an A4 size ($210 \times 297$ mm) determined in ISO 216 is broken into small pieces each of 100 mm$^2$ or less; the small pieces are entirely placed in a polypropylene vessel; 50 mL of water having an electric conductivity of 0.2 mS/m or less is added thereto to immerse the small pieces entirely into the water; after allowing to stand at 23°C $\pm$2°C for 1 hour, the water is filtered with a membrane filter to recover a filtrate; and the filtrate is analyzed by an ion chromatography method to obtain a chloride ion (Cl$^-$) concentration in the filtrate, from which a total chloride ion amount eluted into 50 mL of the water is obtained, and is divided by the mass (g) of the specimen of the paper substrate to provide a value, which is designated as the eluted chloride ion amount per unit mass.

2.  The RFID tag substrate according to claim 1, wherein the RFID tag substrate is for mounting an IC chip having a metallic bump coated with noble metal plating.

3.  The RFID tag substrate according to claim 2, wherein the metal coated with noble metal plating is nickel.

4.  The RFID tag substrate according to claim 1, wherein the conduction circuit contains a silver conductive film.

5.  An RFID tag comprising an RFID tag substrate containing a paper substrate having an eluted chloride ion amount per unit mass (1 g) according to the following item (A) of 0.100 mg or less, having formed on a surface thereof a conduction circuit, and bonded thereto an IC chip having a metallic bump coated with noble metal plating, the conduction circuit and the metallic bump of the IC chip being electrically connected to each other:

    (A) a specimen of the paper substrate having an area corresponding to an A4 size ($210 \times 297$ mm) determined in ISO 216 is broken into small pieces each of 100 mm$^2$ or less; the small pieces are entirely placed in a polypropylene vessel; 50 mL of water having an electric conductivity of 0.2 mS/m or less is added thereto to immerse the small pieces entirely into the water; after allowing to stand at 23°C $\pm$2°C for 1 hour, the water is filtered with a membrane filter to recover a filtrate; and the filtrate is analyzed by an ion chromatography method to obtain a chloride ion (Cl$^-$) concentration in the filtrate, from which a total chloride ion amount eluted into 50 mL of the water is obtained, and is divided by the mass (g) of the specimen of the paper substrate to provide a value, which is designated as the eluted chloride ion amount per unit mass.

6.  The RFID tag according to claim 5, wherein the metal coated with gold plating constituting the bump of the IC chip is nickel.

7.  The RFID tag according to claim 5, wherein the conduction circuit constituting an antenna contains a silver conductive film.

[Fig.1]

[Fig.2]

[Fig.3]

[Fig.4]

[Fig.5]

[Fig.6]

**INTERNATIONAL SEARCH REPORT**

| International application No. |
| --- |
| PCT/JP2015/067538 |

| A. CLASSIFICATION OF SUBJECT MATTER |
| --- |
| *G06K19/02*(2006.01)i, *B32B29/00*(2006.01)i, *G09F3/00*(2006.01)i |

According to International Patent Classification (IPC) or to both national classification and IPC

| B. FIELDS SEARCHED |
| --- |

Minimum documentation searched (classification system followed by classification symbols)
G06K19/02, B32B29/00, G09F3/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>Y | JP 2003-67713 A (Oji Paper Co., Ltd.),<br>07 March 2003 (07.03.2003),<br>paragraphs [0004] to [0005], [0009] to [0010],<br>[0021]<br>(Family: none) | 1,4,5,7<br>2,3,6 |
| Y | JP 2006-195842 A (Hitachi Maxell, Ltd.),<br>27 July 2006 (27.07.2006),<br>paragraph [0021]<br>(Family: none) | 2,3,6 |

| ☐ Further documents are listed in the continuation of Box C. | ☐ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 July 2015 (02.07.15) | 14 July 2015 (14.07.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (July 2009)

**EP 3 168 785 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013127913 A

**Non-patent literature cited in the description**

- Terms of paper, paper board, and pulp. *JIS P0001,* 1998